# EUROPÄISCHE PATENTSCHRIFT

(11) **EP 0 527 976 B1**
(45) Veröffentlichungstag und Bekanntmachung des Hinweises auf die Patenterteilung: **23.10.1996**
(21) Anmeldenummer: 92904003.8
(22) Anmeldetag: 19.02.1992
(51) Int. Cl.: A61J 11/00, G01F 13/00

(54) **KLEINDOSIERVORRICHTUNG FÜR PULVER- ODER GRANULATFÖRMIGE STOFFE**
DEVICE FOR DISPENSING SMALL QUANTIFIES OF POWDERED OR GRANULAR SUBSTANCES
MICRODOSEUR POUR SUBSTANCES PULVERULENTES OU GRANULEUSES

(30) Priorität: 05.03.1991 CH 749/91
(43) Veröffentlichungstag der Anmeldung: 24.02.1993
(73) Patentinhaber: BOHLER, Lorenz, CH-4313 Möhlin (CH)
(72) Erfinder: BOHLER, Lorenz, CH-4313 Möhlin (CH)
(74) Vertreter: Schwabe, Hans-Georg, Dipl.-Ing.
(86) Internationale Anmeldenummer: CH9200032
(87) Internationale Veröffentlichungsnummer: WO9215275

(56) Entgegenhaltungen:
- EP-A- 0 283 251
- DE-U- 8 223 864
- US-A- 2 753 067
- US-A- 2 760 665
- US-A- 3 002 660
- US-A- 3 342 318

## Beschreibung

In der chemischen und biochemischen Industrie sowie in chemischen und biochemischen Labors steht man immer wieder vor der Aufgabe, kleinste Mengen pulver- oder granulatförmiger Substanzen dosieren zu müssen. Das Dosieren im Gramm-, Milligramm- oder Mikrogrammbereich ist zum Beispiel notwendig, um die Substanzen für den Vertrieb in geeignete Verpackungsbehälter oder für die Anwendung in geeignete Laborgefässe einzufüllen. Es kann sich unter anderem um Substanzen handeln, die in der chemischen oder biochemischen Produktion, in der chemischen oder biochemischen Forschung, oder als Wirkstoffe in der Medizin verwendet werden.

Das Problem liegt nicht in der Gewichtsmessung, da es für den erwähnten Gewichtsbereich sehr genaue Waagen gibt, sondern im kontrollierten Einfüllen dieser kleinen Substanzmengen in die dafür vorgesehenen Behälter oder Gefässe.

Für das Kleindosieren gibt es heute folgende Möglichkeiten.

Eine Möglichkeit beim manuellen Dosieren besteht in der Verwendung von Laborlöffeln und Trichtern. Man setzt dabei auf das Gefäss, in das man die Substanz einfüllen will, einen Trichter auf. Mit einem Laborlöffel, dessen Grösse sich nach der Abfüllmenge richtet, nimmt man eine gewisse Menge der Substanz auf und leert die Substanz vom Löffel langsam in das auf einer Waage stehende Gefäss, bis die Füllmenge das gewünschte Gewicht erreicht. Die Fliessgeschwindigkeit der Substanz auf dem Löffel wird durch Verändern der Löffelneigung reguliert. Die Substanz wird aktiviert, indem man mit einem Finger auf den Löffelstiel klopft.

Für die maschinelle Kleindosierung gibt es Geräte, die mit fibrierenden Rillen oder mit rotierenden Walzen, welche die Substanz transportieren, arbeiten.

Das manuelle Dosieren mit Laborlöffel und Trichter ist sehr zeitraubend und umständlich. Es kommt häufig vor, dass man überdosiert und dann nochmals mit dem Dosieren anfangen muss. Die Konstruktion der bestehenden Geräte für das maschinelle Feindosieren ist sehr aufwendig. Die Geräte sind dadurch störungsanfällig. Zudem kommen mehrere Geräteteile mit den Substanzen in Kontakt. Entsprechend viele Teile müssen nach dem Gebrauch jeweils auch gereinigt werden.

US-A-3 139 064 beschreibt eine Vorrichtung gemäß dem Oberbegriff des Anspruchs 4.

Die Erfindung stellt sich die Aufgabe, ein Verfahren und eine Vorrichtung zu schaffen, mit deren Hilfe pulver- oder granulatförmige Substanzen in kleinen Mengen, die im Gramm-, Milligramm- oder Mikrogrammbereich liegen, feinfühliger dosiert werden können.

Die Aufgabe wird erfindungsgemäss mit Hilfe der Ausbildungsmerkmale nach dem kennzeichnenden Teil der Patentansprüche 1 und 4 gelöst.

Die erfindungsgemässe Dosiervorrichtung besteht im wesentlichen aus einem Schnuller 1 von der Art, wie man ihn bei Babyflaschen antrifft. Der Schnuller 1 kann aus Gummi, Silikon oder aus einem anderen Material hergestellt sein. Es zeigen:

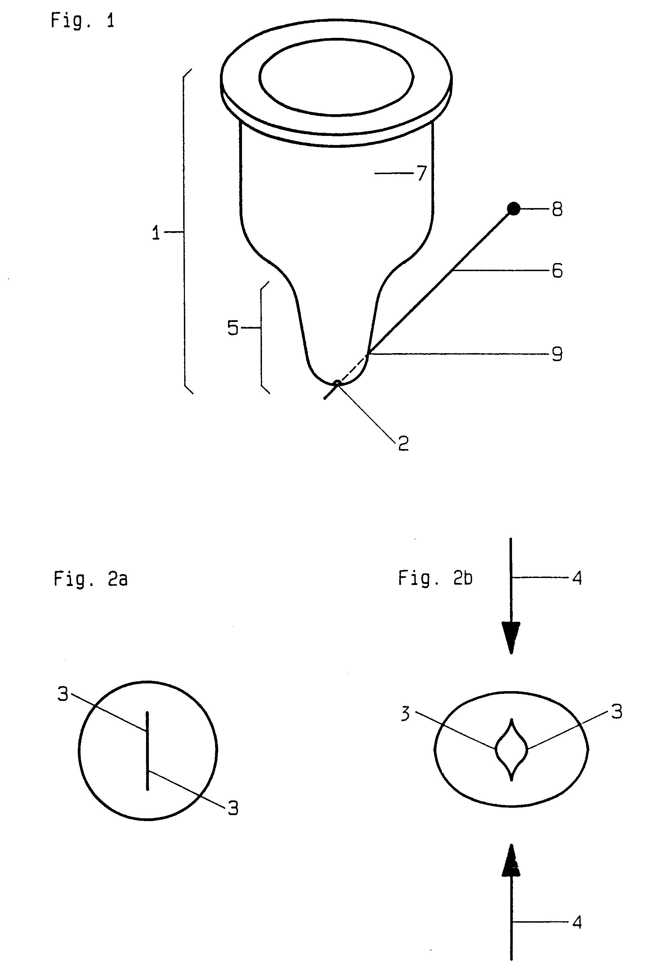

- Fig. 1: Seitenansicht des Dosier-Schnullers mit eingesteckter Aktivator-Nadel
- Fig. 2a: Spitze des Dosier-Schnullers mit geschlossenem Materialauslass von unten gesehen
- Fig. 2b: Spitze des Dosier-Schnullers mit geöffnetem Materialauslass von unten gesehen

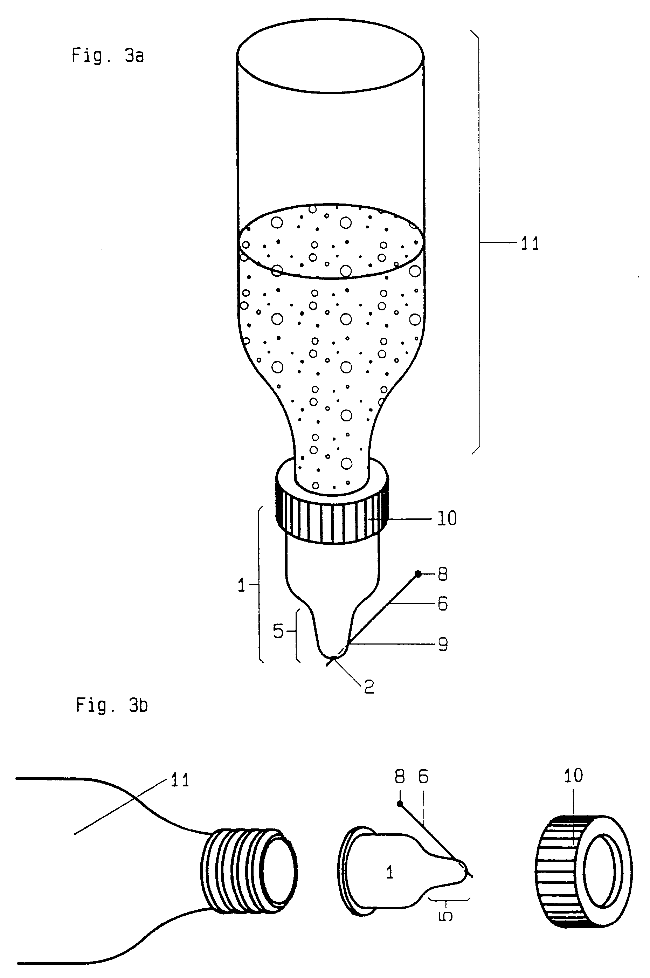

- Fig. 3a: Seitenansicht eines an einer Substanzvorratsflasche befestigten Dosier-Schnullers mit eingesteckter Aktivator-Nadel
- Fig. 3b: Explosionszeichnung des Dosier-Schnullers mit Substanzvorratsflasche, Schraubdeckel und Aktivator-Nadel

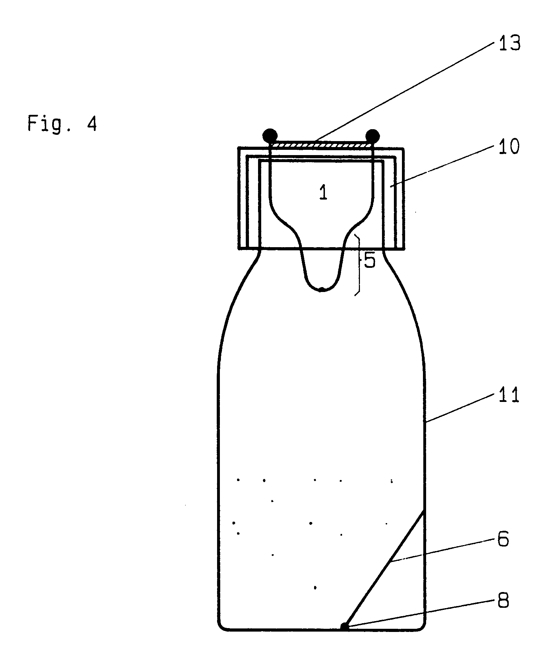

- Fig. 4: Querschnitt durch einen Dosier-Schnuller, der zusammen mit einer Aktivator-Nadel zum Aufbewahren in einer Substanzvorratsflasche untergebracht ist.

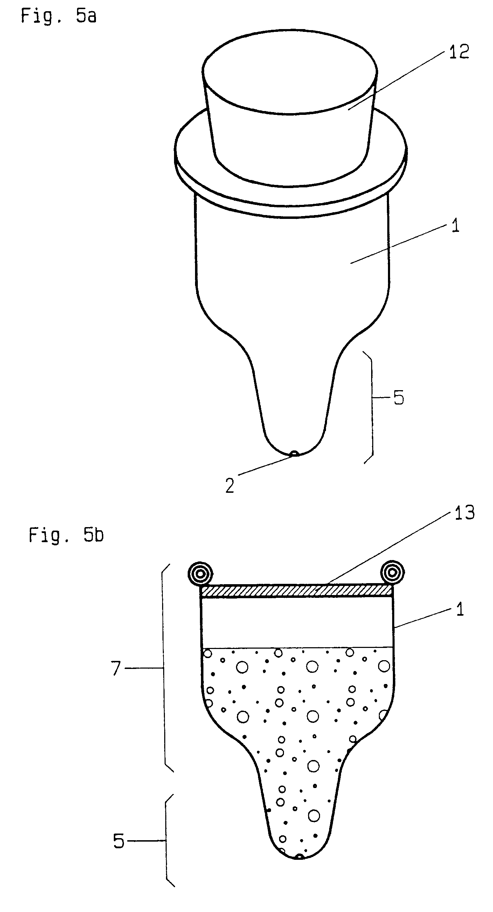

- Fig. 5a: Seitenansicht eines mit einem Zapfen verschlossenen Dosier-Schnullers
- Fig. 5b: Querschnitt eines mit einer kreisförmigen Glasscheibe verschlossenen Dosier-Schnullers

Der Dosier-Schnuller 1 kann zum Dosieren in der Hand gehalten oder an einem Dosierhalter befestigt werden. Der Dosierhalter kann als Dosierpistole ausgebildet sein. Das Dosieren erfolgt bei senkrechter Stellung des Dosier-Schnullers 1.

Der Dosier-Schnuller 1 weist einen durchmessergrösseren Vorratsraum 7 auf, welcher mit einer sich zum Materialauslass 2 hin verjüngenden, zapfenförmigen Spitze 5 versehen ist. Der Materialauslass 2 wird durch eine schlitzförmige Öffnung vorne an der Spitze 5 des Dosier-Schnullers 1 gebildet. Wird auf die Spitze 5 seitlich kein Druck ausgeübt, ist der Materialauslass 2 geschlossen. Wenn man auf die Spitze 5 seitlich, parallel zu den Längsseiten 3 des Materialauslasses 2 Druck ausübt, wird die Spitze 5 zusammengequetscht und dadurch die Längsseiten 3 des Materialauslasses 2 auseinandergedrückt. Der Materialauslass 2 öffnet sich. Mit zunehmendem Druck vergrössert sich die Auslassöffnung, bis sie ihre maximale Grösse erreicht hat. Der seitliche Druck kann manuell oder maschinell erzeugt werden.

Die zu dosierende Substanz wird oben in den Dosier-Schnuller 1 eingefüllt. Beim Öffnen des Materialauslasses 2 kann es, da es oberhalb des Materialauslasses 2 zur Brückenbildung kommt, vorkommen, dass die Substanz nicht aus dem Dosier-Schnuller 1 auszufliessen beginnt. Die Substanz muss in diesen Fällen mittels einer geeigneten Vorrichtung zum Fliessen gebracht, d.h. aktiviert werden. Als Aktivator ist eine Nadel 6 vorgesehen, die etwas (1 - 2 cm) oberhalb des Materialauslasses im spitzen Winkel zur Längsachse des Dosier-Schnullers 1 in die Wand des Dosier-Schnullers 1 gestochen wird. Die Aktivator-Nadel 6 wird soweit in der Richtung des Materialauslasses 2 vorgeschoben, bis ihre Spitze aus der Auslassöffnung ragt. Um die zu dosierende Substanz zu aktivieren, wird die Aktivator-Nadel 6 am Nadelkopf 8 entweder nach unten gedrückt oder nach hinten gezogen. Die Wand des Dosier-Schnullers 1 wird dadurch im Bereich der Nadeleinstichstelle 9 verformt. Durch das Schnellenlassen der Aktivator-Nadel 6 wird sowohl die Nadel als auch ein grosser Wandbereich um die Nadeleinstichstelle 9 in Vibration versetzt. Die Substanz im Dosier-Schnuller 1 wird durch die Vibration aktiviert. Dieser Aktivierungsvorgang kann wiederholt werden, sobald die Wand des Dosier-Schnullers 1 und die Aktivator-Nadel 6 wieder ihre Ausgangsstellung erreicht haben. Die Aktivator-Nadel 6 kann entweder manuell oder aber maschinell betätigt werden.Müssen grössere Substanzvolumen kleindosiert werden, ist vorgesehen, dass der Dosier-Schnuller 1 mittels eines Schraubdeckels 10 oder einer anderen lösbaren Verbindung an einer Substanzvorratsflasche 11 befestigt wird. Falls das Substanzvolumen so klein ist, dass es im Dosier-Schnuller 1 selber Platz hat, kann auch ohne Substanzvorratsflasche 11 gearbeitet werden.

In diesen Fällen wird der Dosier-Schnuller 1 mittels eines Zapfens 12 oder einer kreisförmigen Glas- oder Kunststoffplatte 13 oben verschlossen.

Bei Verwendung einer zusammendrückbaren, aus Kunststoff bestehenden Substanzvorratsflasche 11 kann für das Grobdosieren die zu dosierende Substanz durch wiederholtes Zusammmendrücken und Loslassen der Flaschenwände aktiviert werden. Für das Feindosieren kommt dann wieder die Aktivator-Nadel 6 zum Einsatz.

Der Dosier-Schnuller 1 kann zusammen mit der Aktivator-Nadel 6 in einer verschliessbaren Flasche aufbewahrt werden. Eine Möglichkeit besteht darin, dass man den Dosier-Schnuller 1 oben mit einer kreisförmigen Scheibe 13 abschliesst und ihn umgekehrt in die Öffnung des auf die Substanzvorratsflasche 11 aufgeschraubten Schraubdeckels 10 steckt.

Bei einer maschinellen Bedienung des Dosier-Schnullers 1 ist eine elektronische Steuerung vorgesehen. Sie steuert den Mechanismus, der den Materialauslass 2 öffnet und schliesst und die Aktivator-Nadel 6 bewegt. Das Gefäss, das die Substanz aufnehmen soll, steht auf einer Waage. Das momentane Füllgewicht wird der Steuereinheit übermittelt.

Das Sollgewicht kann vorprogrammiert werden. Die Steuereinheit vergleicht das momentane Füllgewicht mit dem vorgegebenen Sollgewicht und stimmt den Öffnungsgrad des Materialauslasses 2 und die Bewegungen der Aktivator-Nadel 6 auf das momentane Füllgewicht ab. Erreicht das Füllgewicht das Sollgewicht, schliesst die Steuereinheit den Materialauslass 2. Die Steuereinheit kann am Dosierhalter angebracht werden.

Die erfindungsgemässe Kleindosiervorrichtung weist im Vergleich zu bisher bekannten Vorrichtungen oder Geräten wesentliche Vorteile auf.

Der Dosier-Schnuller 1 ist als eigentliches Dosierorgan einfach und billig herzustellen. Falls das Dosierorgan defekt ist oder falls man es nicht mehr braucht, kann es ohne grossen Verlust fortgeworfen werden. Die bisher bekannten Geräte arbeiteten mit aufwendigen Dosierorganen wie vibrierenden Rillen, oder rotierenden Walzen.

Die einfache Konstruktion der vorgeschlagenen Dosiervorrichtung garantiert eine problemlose, störungsarme Anwendung.

Die Aktivator-Nadel 6 aktiviert auch Substanzschichten, die oberhalb der Nadeleinstichstelle 9 liegen. Dadurch kann ein kontinuierlicher Materialfluss erreicht werden, der ein exaktes Dosieren kleinster Substanzmengen erlaubt.

Nur das eigentliche Dosierorgan, der Dosier-Schnuller 1 kommt mit der zu dosierenden Substanz in Kontakt. Nach dem Gebrauch der Dosiervorrichtung muss somit nur der Dosier-Schnuller 1 gereinigt werden. Beim Reinigen sind verschiedene Vorgehensweisen möglich. Der Dosier-Schnuller 1 kann z.B. ausgekocht werden. Er kann aber auch mit heissem Wasserdampf abgedampft werden. Eine weitere Möglichkeit besteht darin, dass man den Dosier-Schnuller 1 in eine Reinigungslösung, die ein geeignetes Reinigungsmittel enthält, taucht und durch mehrmaliges Zusammenquetschen des Dosier-Schnullers 1 die Reinigungslösung durch diesen hindurchpresst.

Abschliessend kann gesagt werden, dass die erfindungsgemässe Kleindosiervorrichtung sich durch ihre Einfachheit und Zweckmässigkeit auszeichnet. Zu ihrem Anwendungsbereich gehören chemische oder biochemische Labors, chemische oder biochemische Produktionsanlagen, wo sie z.B. zum Abfüllen von Feinchemikalien eingesetzt werden kann, oder der pharmazeutische Bereich, wo sie sich z.B. zum Dosieren von Wirkstoffen eignet.

## Patentansprüche

1. Verwendung einer Vorrichtung zum Kleindosieren von pulver- oder granulatförmigen Stoffen, wobei die Vorrichtung (1) einen sich unter seitlichem Druck öffnenden und sich variabel erweiternden Auslaß (2, 3) und einen durchmessergrößeren Vorratsraum (7) in Art eines Babyschnullers aufweist, der mit einer sich zum Auslaß (2, 3) hin verjüngenden, zapfenförmigen Spitze (5) zur Druckausübung versehen ist, und wobei die Stoffe durch Drücken ausgepreßt werden oder bei geöffnetem Auslaß durch Lockerung des zu dosierenden Stoffes herausgelangen.

2. Verwendung nach Anspruch 1, dadurch gekennzeichnet, daß der Bereich oberhalb des Auslasses in Vibration versetzt wird.

3. Verwendung nach Anspruch 1 oder 2, dadurch gekennzeichnet, daß die Dosierung abhängig von einem Sollwert und dem Gewicht von bereits dosiertem Gut automatisch gesteuert wird.

4. Kleindosierungsvorrichtung für pulver- oder granulatförmige Stoffe, wobei die Vorrichtung (1) einen sich unter seitlichem Druck öffnenden und sich variabel erweiternden Auslaß (2, 3) und einen durchmessergrößeren Vorratsraum (7) in Art eines Babyschnullers aufweist, der mit einer sich zum Auslaß (2, 3) hin verjüngenden, zapfenförmigen Spitze (5) zur Druckausübung versehen ist, gekennzeichnet durch eine Lockerungseinrichtung (6), die oberhalb des Auslasses (2, 3) zur Auflösung einer Dombildung ansetzbar ist, und/oder durch eine Aktivierungseinrichtung zur Druckausübung und/oder zur Vibration der Lockerungseinrichtung (6).

5. Vorrichtung nach Anspruch 4, dadurch gekennzeichnet, daß der Auslaß (2, 3) schlitzförmig ist.

6. Vorrichtung nach Anspruch 4 oder 5, dadurch gekennzeichnet, daß die Lockerungseinrichtung eine Aktivatornadel (6) ist, die im Bereich (9) oberhalb des Auslasses (2, 3) durchgestochen ist, wobei ihre Spitze in den Bereich (5) oberhalb des Auslasses (2, 3) reicht, während ein Teil der Nadel (6) sich außerhalb erstreckt.

7. Vorrichtung nach einem der Ansprüche 4 bis 6, gekennzeichnet durch eine Anschlußvorrichtung (10) an einen Vorratsbehälter (11).

8. Vorrichtung nach einem der Ansprüche 4 bis 7, dadurch gekennzeichnet, daß die dem Auslaß (2, 3) gegenüberliegende Öffnung mittels einer Abdeckung (12, 13) verschließbar ist.

9. Vorrichtung nach Anspruch 8, dadurch gekennzeichnet, daß die Abdeckung ein Stopfen (12) ist.

10. Vorrichtung nach Anspruch 8, dadurch gekennzeichnet, daß die Abdeckung eine Scheibe (13) ist.

11. Vorrichtung nach einem der Ansprüche 4 bis 10, dadurch gekennzeichnet, daß die Aktivierungseinrichtung eine elektrische Steuereinheit aufweist, die die Vorrichtung (1) abhängig von einem eingestellten Sollwert und dem Gewicht des bereits dosierten Füllgutes aktiviert und bei Erreichen des Sollwerts schließt.

12. Vorrichtung nach einem der Ansprüche 4 bis 11, dadurch gekennzeichnet, daß eine Halterung für die Abstützung der Vorrichtung (1) und/oder der Steuereinheit vorgesehen ist.

## Claims

1. Application of a device for micro-dosing powdery and granulate substances, said device (1) featuring an outlet (2, 3), said outlet opening upon lateral pressure being applied to it and expanding in a variable manner, said device also featuring a reservoir (7) comparable to that of a baby bottle nipple, said reservoir featuring a cone-shaped tip (5) and being larger in diameter than said tip, said tip tapering down to an outlet (2, 3) and being provided for the purpose of exerting pressure, with the material being pressed out of said device by way of the exertion of pressure or exiting through the open outlet by virtue of the substance to be dosed being loosened.

2. An application as claimed in Claim 1 wherein the area above the outlet is caused to vibrate.

3. An application as claimed in Claim 1 or 2 wherein dosing is automatically regulated in keeping with a preset target value and the weight of the quantity already dosed.

4. Micro-dosing device for powdery and granulate substances, said device (1) featuring an outlet (2, 3), said outlet opening upon lateral pressure being applied to it and expanding in a variable manner, said device also featuring a reservoir (7) comparable to that of a baby bottle nipple, said reservoir featuring a cone-shaped tip (5) and being larger in diameter than said tip, said tip tapering down to an outlet (2, 3) and being provided for the purpose of exerting pressure, said device being characterized by a loosening device (6) capable of being applied above the outlet (2, 3) for the purpose of countering arching and/or by an activation device for the purpose of exerting pressure and/or vibrating the loosening device (6).

5. A device as claimed in Claim 4 wherein the outlet (2, 3) is slit-shaped.

6. A device as claimed in Claim 4 or 5 wherein the loosening device is an activator needle (6), said needle being pierced into a site (9) above the outlet (2, 3), the tip of said device extending into the area (5) above the outlet (2, 3), with a portion of the needle (6) projecting outside of the tip of said device.

7. A device as claimed in one of the Claims 4 to 6 wherein a connecting device (10) is mounted to a stock receptacle (11).

8. A device as claimed in one of the Claims 4 to 7 wherein the opening located at the end opposite the outlet (2, 3) is capable of being closed or sealed off by means of a covering (12, 13).

9. A device as claimed in Claim 8 wherein said covering is a plug (12).

10. A device as claimed in Claim 8 wherein said covering is a disc (13).

11. A device as claimed in one of the Claims 4 to 10 wherein said device features an electric control unit which activates said device (1) in accordance with a preset target value and the weight of the quantity already dosed and which closes said device upon the preset target value being attained.

12. A device as claimed in one of the Claims 4 to 11 wherein a mount is provided for supporting the device (1) and/or the control unit.

## Revendications

1. Utilisation d'un dispositif pour le dosage fin de matières poudrées ou granulats, ce dispositif (1) présentant un orifice de grandeur variable (2,3) s'ouvrant quand on le presse latéralement, avec une chambre de stockage d'un diamètre plus grand que l'orifice ayant la forme d'une tétine pour bébé se rétrécissant jusqu'à l'orifice (2, 3) en pointe en forme de bouchon, permettant ainsi la mise sous pression des matériaux se trouvant à l'intérieur qui sont pressés ou qui s'écoulent par l'orifice ouvert par le fait du relâchement du matériau à doser.

2. Utilisation selon la revendication 1, caractérisé par le fait que le domaine au dessus de l'orifice est mis en vibration.

3. Utilisation selon la revendication 1 ou 2, caractérisé par le fait que le dosage est automatiquement commandé en se basant sur une valeur et un poids prédéterminé par un matériau déjà dosé.

4. Dispositif de dosage fin pour des matières poudrées ou en forme de granulats, ce dispositif (1) présentant un orifice de grandeur variable (2,3) s'ouvrant quand on le presse latéralement, avec une chambre de stockage (7)d'un diamètre plus grand que l'orifice ayant la forme d'une tétine pour bébé se rétrécissant jusqu'à l'orifice (2, 3) en pointe en forme de bouchon (5), pour permettre la mise sous pression, caractérisé par un dispositif de relâchement (6) pouvant y être adjoint, qui au dessus de l'orifice (2, 3) peut dissocier un dôme de matériau en formation, et/ou l'adjonction d'un dispositif d'activation de mise en pression et/ou l'adjonction d'une mise en vibration du dispositif de relâchement (6).

5. Dispositif selon la revendication 4, caractérisé par le fait que l'orifice (2, 3) possède une forme d'une fente.

6. Dispositif selon les revendications 4 et 5, caractérisé par le fait que le dispositif de relâchement est une aiguille d'activation (6) qui est percée dans le domaine (9) au dessus de l'orifice (2, 3), la pointe de cette aiguille allant jusqu'au domaine au dessus de l'orifice (2, 3), pendant qu'une partie de l'aiguille (6) va jusqu'à l'extérieur.

7. Dispositif selon les revendications 4 à 6, caractérisé par un dispositif terminal (10) apposé à une chambre de stockage (11).

8. Dispositif selon les revendications 4 à 7, caractérisé par le fait que l'ouverture se trouvant en face de l'orifice (2, 3) peut être fermée (12, 13).

9. Dispositif selon la revendication 8, caractérisé par le fait que le recouvrement pour fermer l'ouverture est un bouchon (12).

10. Dispositif selon la revendication 8, caractérisé par le fait que le recouvrement pour fermer l'ouverture est un disque (13).

11. Dispositif selon les revendications 4 à 10, caractérisé par le fait que le dispositif d'activation dispose d'une commande électrique, qui, si elle est activée, ferme automatiquement le dispositif (1) à une valeur prédéfinie à atteindre, quand le poids prédéterminé par un matériau déjà dosé est atteint.

12. Dispositif selon les revendications 4 à 11, caractérisé par le fait qu'une fixation est prévue comme support pour le dispositif (1) et/ou pour la commande.
